# NEW EUROPEAN PATENT SPECIFICATION

(11) **EP 1 414 634 B2**
(45) Date of publication and mention of the opposition decision: **09.05.2012**
(45) Mention of the grant of the patent: 01.03.2006
(21) Application number: 02751307.6
(22) Date of filing: 10.07.2002
(51) Int. Cl.: B29C 45/17

(54) **PROCESS FOR INJECTION MOULDING**
VERFAHREN ZUM SPRITZGIESSEN
PROCEDE DE MOULAGE PAR INJECTION

(30) Priority: 10.07.2001 US 902354; 30.07.2001 US 918234; 14.09.2001 GB 0122292
(43) Date of publication of application: 06.05.2004
(73) Proprietor: Cinpres Gas Injection Limited, Middlewich, Cheshire CW10 0GD (GB)
(72) Inventor: PEARSON, Terence, Colwyn, Nantwich, Cheshire CW5 5RL (GB)
(74) Representative: Bayliss, Geoffrey Cyril
(86) International application number: PCT/GB2002/003200
(87) International publication number: WO 2003/006226

(56) References cited:
- EP-A- 0 402 730
- EP-A2- 0 393 315
- WO-A-96/34731
- AT-T- 75 993
- DE-A- 4 033 298
- DE-A- 19 531 709
- DE-A1- 4 319 381
- DE-A1- 19 728 607
- DE-C1- 19 532 243
- DE-C1- 19 729 557
- DE-T1- 69 520 124
- DE-T2- 68 929 311
- GB-A- 2 315 040
- JP-A- 5 096 560
- JP-A- 5 154 862
- JP-A- 6 285 895
- US-A- 5 928 677
- PATENT ABSTRACTS OF JAPAN vol. 1999, no. 02, 26 February 1999 (1999-02-26) -& JP 10 291227 A (MUSASHI KAKO KK), 4 November 1998 (1998-11-04)
- PATENT ABSTRACTS OF JAPAN vol. 016, no. 253 (M-1263), 9 June 1992 (1992-06-09) -& JP 04 062118 A (ISUZU MOTORS LTD), 27 February 1992 (1992-02-27)
- PATENT ABSTRACTS OF JAPAN vol. 18, no. 474 (M-1668), 5 September 1994 (1994-09-05) -& JP 06 155501 A (KYORAKU CO LTD), 3 June 1994 (1994-06-03)

## Description

The present invention relates to a process and apparatus for injection moulding hollow plastics articles.

Injection moulding of plastics materials is well known and widely practised as a means of manufacturing an ever-increasing diversity of plastics components for industrial and consumer use. During the last two decades, versions of the process globally referred to as "gas assisted moulding" have been developed and used to overcome some of the problems inherent in conventional injection moulding, and to reduce costs and improve the quality of the final products.

In conventional gas assisted injection moulding, a gas, such as nitrogen, is injected into the molten plastics material after it has entered the mould cavity. The low viscosity gas flows into the paths of least resistance within the more viscous plastics, thereby forming hollow channels within the plastics. The process is particularly beneficial for thick section mouldings, such as handles, and weight savings of up to 45% or more can result. Also, the moulding time cycles can be substantially reduced. In multi-section mouldings, the injected gas tends to flow into the thicker sections, again forming hollow continuous channels through which pressure may be transmitted through the medium of the gas. This adds to the scope of the designer and removes some of the design restrictions of conventional moulding.

One conventional gas assisted plastics moulding process partially fills the mould cavity with an accurately controlled shot volume of plastics. Gas is then injected in order to continue the flow of plastics so that the cavity is filled with plastics and gas. The gas is used to exert outward pressure on the plastics material forcing it against the mould cavity surfaces, thereby achieving a good replication of the mould surface on the plastics moulded surface. After the plastics has solidified, the gas pressure is reduced by exhausting the gas to atmosphere, and the mould is opened and the part ejected. This is sometimes referred to as a "short shot" process.

In another method, the mould cavity is completely or substantially filled with plastics material and then instead of injecting or packing more plastics into the cavity to compensate for the volumetric shrinkage of the plastics as it cools and solidifies, gas is injected into the plastics so that the gas expansion compensates for the plastics contraction. In practice, the initial gas penetration will continue to expand during the cooling cycle while the plastics is shrinking in volume. This is sometimes referred to as a "full shot" process.

In the "full shot" process, it is sometimes difficult to achieve sufficient gas penetration along intended gas channels because there is insufficient volumetric shrinkage of the plastics to provide space for the gas. In such cases, a method of enabling some plastics to outflow from the mould cavity into overflow wells or "secondary" cavities is helpful in providing space for the gas expansion.

In the "short shot" method, some mouldings may also be difficult to fill with plastics and gas to the extremities of the mould cavity. If the shot volume is too little, the gas may break through the leading edge of the plastics material during filling, thereby losing control of the gas. If the shot volume is too high, the gas will not reach the extremities of the mould cavity. Therefore thick section mouldings using the "short shot" process can also benefit from an additional displacement of plastics from the mould cavity into an overflow cavity.

A method of at least partially filling the mould cavity before injection of the gas and employing an overflow cavity is described in U.S. Patent No. 5,098,637. However, in order to use the method of this patent successfully, it is necessary to accurately control the shot volume for both "short shot" and "full shot" methods, because there is no resistance to prevent the plastics from flowing into and filling the overflow cavity before the gas is injected.

In the "short shot" process, the flow of plastics is temporarily stopped at the end of the filling sequence, and then typically there is a delay of up to five seconds before injection of the gas urges the plastics forward to complete the filling of the article cavity with plastics and gas and the overflow cavity with plastics. In the "full shot" process, the mould cavity is filled with, or substantially filled with, molten plastics and the gas is injected to compensate for the volumetric shrinkage of the plastics and to displace plastics into the overflow cavity. In both cases, since the runner to the overflow cavity is open, it is not feasible to apply "packing pressure" to the plastics in the mould cavity before displacement of the plastics into the overflow cavity occurs i.e. there is nothing to restrain the further flow of plastics. Furthermore, in the "short shot" process, or when nearly filling the cavity in a "full shot" process, there may remain unsightly visible hesitation lines or marks on the moulding surface at the position of the first plastics injection.

Another method is disclosed in Japanese Patent Application No. 50-74660, in which a shut-off valve is positioned in a runner connecting the mould cavity and a "secondary cavity". In this application, the mould cavity is filled with thermoplastics resin and then a core resin or gas is injected into the mould cavity while thermoplastics resin is expelled from the mould cavity.

It is known from FR 1.145.441 to introduce a plastics material into a mould cavity. Once the filling of the cavity is completed and after the plastics material has been given time to solidify in contact with the walls of the mould, the injection of a gas into the inside of the mould cavity, if done with sufficient pressure, can remove the still-liquid or semi-liquid material from the mould.

According to one aspect of the invention there is provided a process for injection moulding a hollow plastics article as claimed in claim 1.

The process includes the step of applying a packing pressure to the plastics material injection pressure in the mould cavity, prior to the injection of the pressurised gas or liquid into the plastics material in the mould cavity. An injection moulding machine is employed to inject the plastics material into the mould cavity and to apply an initial packing pressure to the plastics material, the pressurised gas or liquid applying a further packing pressure to the plastics material in the mould cavity.

The process comprises the step of applying the packing pressure to the plastics material injection pressure in the mould cavity for a predetermined amount of time prior to the injection of gas or liquid into the plastics material.

Preferably the expulsion step is achieved by opening a valve in a flow runner or conduit connecting the mould cavity to the or each secondary cavity whilst maintaining gas or liquid pressure in the mould cavity.

In one embodiment the plastics article to be moulded has at least one section which is thicker than other sections and the charge of pressurised gas or liquid is introduced into the thicker section in order to form a hollow portion therein.

The process may include the step of adjusting the volume of the at least one secondary cavity in order to allow expulsion of a predetermined amount of plastics material from the mould cavity.

Portions of the plastics material may be expelled into at least two subsidiary cavities.

In one embodiment at least two secondary cavities are provided and the step of allowing portions of the plastics material in the mould to be expelled into the secondary cavities comprises opening valve members positioned in respective flow runners or conduits connecting the mould cavity with the secondary cavities. The process may further comprise the step of sequentially controlling the opening of the valve members in order to allow selective expelling of plastics material into the at least two secondary cavities.

In one embodiment the process is applied for injection moulding a hollow plastics tubular article, the mould cavity having a substantially cone-shaped inlet portion, an elongate central portion and an exit portion.

Preferably said cone-shaped portion has an apex and said gas or liquid is injected into the plastics material at said apex.

It is also preferred that said exit portion comprises a second substantially cone-shaped portion, said cone-shaped exit portion having an apex and said expulsion of plastics material from the mould cavity into the secondary cavity occurs through said apex.

Preferably the plastics material is injected into the mould cavity at said cone-shaped inlet portion and maintains contact with the surfaces of the mould cavity as the mould cavity is filled.

There may be provided a ring gate mechanism for injecting the plastics material into said cone-shaped inlet portion.

The process preferably includes the step of trimming at least one end of the article to form a tubular article. Thereby the article may be trimmed to form a tubular article of substantially constant cross-section.

The plastics material may be injected into the mould cavity from an injection moulding machine with a barrel and nozzle, and the process includes the step of allowing a portion of the plastics material in the mould to be expelled back into the barrel of the injection moulding machine, the barrel constituting the secondary cavity or one of the secondary cavities.

According to another aspect of the invention there is provided a process for injection moulding a hollow plastics article as claimed in claim 19.

The step of holding the pressure of the gas or liquid on the plastics material in the mould cavity ensures that the plastics material is held against a wall surface of the mould cavity and an outer skin of the plastics material has solidified whilst a core portion of the plastics material remains molten.

The step of injecting plastics material into the mould cavity includes the step of applying a packing pressure to the plastics material.

The injection moulding machine is employed to apply a packing pressure to the plastics material injection pressure in the mould cavity, prior to the injection of pressurised gas or liquid into the plastics material.

Preferably the step of allowing plastics material to be expelled back into the barrel of the injection moulding machine is controlled so that a predetermined amount is expelled in a controlled manner.

In one embodiment, the amount of plastics material which is expelled is controlled by controlling the speed and/or the extent by which the plastics material retracts an injection piston or screw in the barrel of the injection moulding machine.

Additionally or alternatively the amount of plastics material which is expelled is controlled by timing the closure of a shut-off valve member positioned in the flow path between the mould cavity and the barrel of the injection moulding machine.

It is also preferred that the gas or liquid is injected into the plastics material at a location spaced from the nozzle of the injection moulding machine.

Preferably the step of allowing a portion of the plastics material in the mould to be expelled back into the barrel of the injection moulding machine comprises opening a shut-off valve member positioned in the flow path between the mould cavity and the barrel of the injection moulding machine. The valve member is preferably included as part of the nozzle of the injection moulding machine.

In one embodiment a first portion of plastics material in the mould is allowed to be expelled back into the barrel of the injection moulding machine, and the process comprises the step of also allowing a respective second portion of the plastics material in the mould to be expelled into one or more secondary cavities coupled to the mould cavity.

Preferably the step of allowing one or more second portions of the plastics material to be expelled into a respective secondary cavity comprises opening a valve member positioned in the flow path between the mould cavity and the secondary cavity.

By way of example, specific embodiments in accordance with the invention will be described with reference to the accompanying schematic drawings in which:-
Figures 1A - 1E illustrate a sequence of steps in a first embodiment;
Figure 2 is a graph further illustrating the in mould pressure time sequence as set forth in Figures 1A - 1E;
Figures 3A - 3E illustrate a sequence of steps in another embodiment;
Figures 4A - 4F illustrate a further embodiment of the invention in which two secondary cavities are utilised;
Figures 5A - 5F illustrate a sequence of steps in a still further embodiment, particularly used for the manufacture of hollow tubular components;
Figures 6 and 7 illustrate alternative embodiments at the entrance end of the hollow tubular component embodiment; and
Figure 8 is a graph illustrating in mould pressure time sequence when employing liquid as the pressurised fluid.

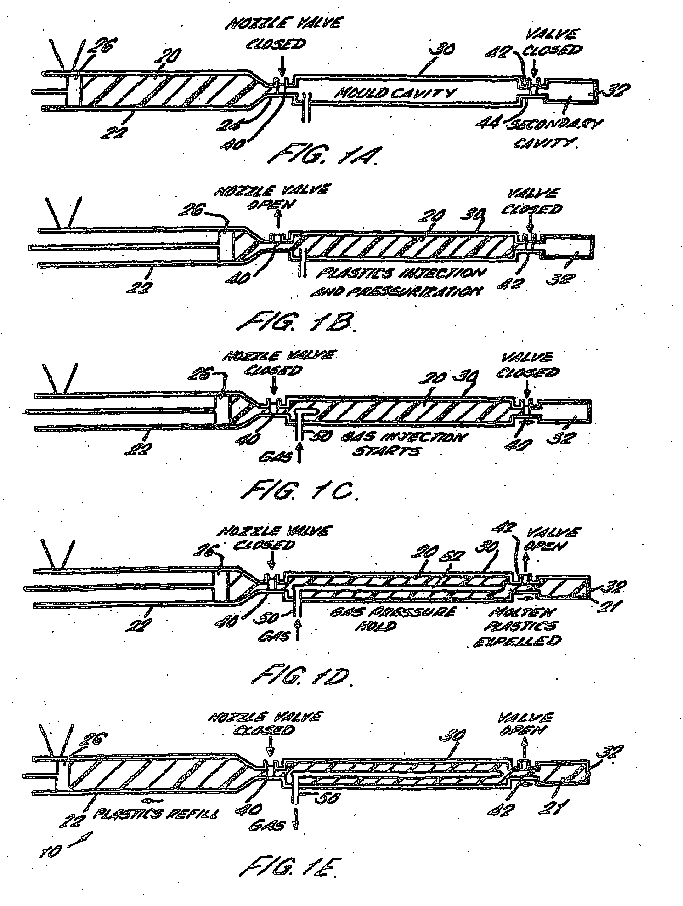

Figures 1A - 1E illustrate the sequence steps of an embodiment of the present invention. This process is referred to generally by the reference numeral 10 in the drawings. In Figure 1A, a quantity of molten plastics material 20 is positioned in the barrel 22 of an injection moulding machine. The injection moulding machine can be of any conventional type and can expel the plastics material from the nozzle of the barrel in any conventional manner, such as by a helical screw or a piston 26. Although a piston member 26 is shown and illustrated and described in Figures 1A - 1E, it is to be understood that any conventional mechanism used to expel the plastics material from a barrel of an injection moulding machine can be utilised.

As shown in Figure 1A, the nozzle 24 of the injection moulding machine is connected to a mould cavity 30. The mould cavity 30 is positioned in a conventional mould which in turn is positioned in a conventional moulding machine. In this embodiment, the mould cavity 30 represents a thicker section of the article to be moulded. A secondary cavity 32 is positioned within the mould in communication with the mould cavity 30, and coupled to the mould cavity by a flow runner or conduit 44. A valve member 40 is positioned between the nozzle 24 and the mould cavity 30 while a second valve member 42 is positioned in the flow runner or conduit 44. The valve members 40 and 42 can be of any conventional type, but in this embodiment are shut-off type valve members, and can be operated in any conventional manner, such as pneumatically, hydraulically, electrically, etc. Control of the valve members 40 and 42 can also be accomplished with any conventional mechanism or system. For example, the mechanism can be computer operated so that the valves can be accurately timed to open and close as desired in accordance with a prespecified injection moulding process.

The quantity of plastics material 20 in the barrel 22 of the injection moulding machine is sufficient to fill or substantially fill the volume of the mould cavity 30. The plastics material 20 which can be used or utilised with the present invention can be of any conventional type, such as a thermoplastics resin. The plastics material can also be a filled material, that is mixed with a glass or mineral material.

In an alternative embodiment, two or more secondary cavities can be provided. The secondary cavities are each connected to the mould cavity 30 by separate runners or conduits 44. Also, independently controlled separate valve members are positioned in each of the runners or conduits 44 between the mould cavity 30 and the secondary cavities. In this embodiment, the secondary cavities constitute overflow cavities, which can be filled separately and the valve members 42 are timed in order to allow the plastics material to be expelled as desired and where necessary in order to optimise the production process and plastics product produced by the process.

Referring back to Figure 1, the second step in the process is shown in Figure 1B. In this step, the plastics resin material 20 is injected by the molten injection moulding machine into the mould cavity 30. For this process step, valve member 40 is opened in order to allow plastics material to enter the mould cavity 30, but valve member 42 is retained in a closed position in order to prevent any plastics from entering the secondary cavity 32. The plastics in the mould cavity is then pressurised by the moulding machine ("packing pressure") for a short predetermined period of time, for example 1-5 seconds. This assists to ensure good reproducibility of the mould surface on the moulded article in the cavity.

At this point, the gas is injected at selected ram and hold pressures. As explained above, this is possible in the case of a full shot process due to the volumetric contraction or shrinkage of the plastics material in the mould cavity 30. In the schematic embodiment shown, gas, for example nitrogen, is injected through inlet conduit 50. This is shown in Figure 1C. Initially, the valve member 42 remains in a closed condition for a predetermined amount of time such that the pressure of the gas creates a hollow cavity in the molten material 20 and forces the plastics material against the inner wall surfaces of the mould cavity, and an outer skin of the plastics material has solidified whilst a core portion of the plastics material remains molten, thereby helping to provide a good surface finish on the plastics product.

Thereafter, as shown in Figure 1D, the valve member 40 is closed and the valve member 42 opened. The pressure of the gas 52 in the molten plastics material 20 in the mould cavity 30 causes a portion of the molten plastics to be expelled from the mould cavity into the secondary cavity 32. In this regard, the molten plastics material is preferably expelled from the centre of the thicker sections in the mould article through the connecting gates or runner 44. Thereafter, a gas "hold" or "packing" pressure is maintained in the mould cavity whilst the remaining plastics material cools and solidifies. This takes in the order of 10-25 seconds or longer, depending on the size and thickness of the moulded plastics product.

It is generally necessary to adjust the volume of the or each secondary cavity 32 after the first or subsequent mould test trial in order to match the volume of the respective secondary cavity with the volume of plastics required to be expelled from the moulding cavity. This may be done by metal machining or removal from the mould to increase the volume, or addition of metal to reduce the volume. Initially, the volume of plastics expelled into the or each secondary cavity is determined by the time at which the valve member 42 is opened. If the valve opening time is prolonged, more of the plastics solidifies in the mould cavity, i.e. the solid skin of plastics will thicken, and less is expelled; conversely, if the valve opening time is advanced, i.e. the delay time in opening is reduced, the skin thickness is reduced and more plastics is expelled. When the balance of secondary cavity volume and valve opening time is optimised, the process can be operated consistently shot-after-shot in production.

The amount of plastics material which is expelled into the overflow cavity can also be controlled by the time at which the valve member 42 is opened.

It is also possible to operate the present process with valve member 40 open or without use of a valve such as valve member 40 positioned between the injection moulding machine and the mould, by holding piston 26 in its forward position. However, it is preferable to close valve member 40 or an equivalent hot runner valve gate, to provide positive means for preventing plastics from being forced back into the screw or piston cylinder, i.e. the barrel 22, when pressurised by the gas.

Once the remaining plastics material in the mould cavity has sufficiently cooled and solidified, the gas 52 is exhausted, for example, back through conduit 50. This is shown in Figure 1E. The expelled gas can be either collected and reclaimed for further use, or expelled into the atmosphere. Mechanisms and systems for exhausting or venting pressurised gas from the interior of the moulded article preparatory to opening the mould are described in numerous patents in the prior art. In this regard, any conventional mechanism or system for exhausting or venting the gas from the mould and moulded article can be utilised in accordance with the present invention. At the same time that the gas is exhausted, the piston or ram 26 of the injection moulding machine is typically retracted to its rest position (as illustrated) in preparation for another shot of plastics material.

Once the gas is vented or exhausted from the mould cavity, the mould is opened and the finished plastics product is ejected or removed from the mould cavity. At the same time, the expelled plastics material 21 in the secondary cavity 32 is similarly ejected or removed from the mould. The plastics in the secondary cavity 32 can be reground and reused, if desired, to avoid waste of material, or the cavity itself can be used to form another plastics part for possible use.

The positioning of one or more injectors 50 in the mould cavity should preferably be adjacent to the thicker sections and remote from, and at the opposite extremity to, the expulsion gates and runners. In the case of two or more gas injectors in the mould cavity, the commencement of gas injection from each gas feed position may be sequentially controlled by appropriate control means. Also, the positioning of the plastics feed gate or gates, if more than one is provided, in the mould cavity, should be selected to optimise the flow of plastics into the mould cavity. As explained above, it is necessary to prevent in-mould gas pressure from forcing the plastics back into the injection moulding machine by using a shut-off valve 40, as illustrated, or by holding the ram screw forward, or by use of a hot runner system with valve gates.

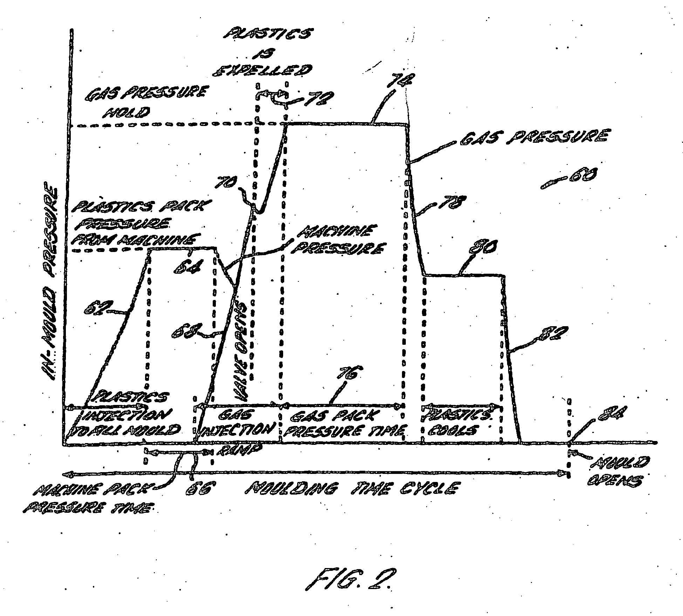

A graph illustrating the sequence of steps described above is shown in Figure 2. The graph is referred to generally by the reference numeral 60 in Figure 2 and charts the moulding cycle time relative to the pressure in the mould. In this regard, the pressure in the mould initially increases as shown by line 62 as the plastics is injected into the mould cavity. The moulding machine then holds the plastics packed pressure as shown by line 64. The time at which the machine packs the pressure is indicated by the arrow 66. That time can be adjusted as desired.

Thereafter, as shown by line 68, the gas is injected into the plastics material in the mould cavity. At point 70, the valve member 44 regulating the flow of plastics material into the secondary cavity is opened. This allows plastics to be expelled from the mould cavity into the secondary cavity. This step is indicated by the arrow 72. Thereafter, the pressure of the gas in the mould cavity is held. This is shown by line 74. The time of the gas packing pressure is shown by the arrow 76 in Figure 2.

Subsequently, the gas pressure is reduced in the mould. This is shown by line 78. The gas pressure can also be held constant for a period of time, as shown at 80, in order to allow the plastics material to cool and harden. Thereafter, that is once the plastics part is cooled and hardened, the gas is ejected from the mould. Once the pressure of the gas is vented or exhausted from the mould cavity, as shown by line 82, the mould is opened and the part removed. This is shown at point 84 on the graph of Figure 2.

With the system and process of the present invention, the method is not dependent on the injection of an accurately controlled shot volume of plastics repeatedly shot after shot. Also, the ability to pressure pack the plastics, due to volumetric contraction or shrinkage of the plastics, while the mould cavity is filled with plastics, or is filled with plastics and initial injection of gas, ensures accurate replication of the mould cavity surface without shrinkage of the plastics from the surface.

Avoiding the need to partially fill the article cavity eliminates the tendency to form hesitation marks on the product at positions to which the plastics flows and stops before the gas is injected.

The dependence on a fixed volume of plastics material which is expelled from the mould cavity eliminates the variable dependence on timing of the gas injection. Also, the present invention is suitable for multi-cavity moulds, with each cavity being able to be connected to one or more secondary cavities, thereby eliminating any need to balance the flow of plastics in order to partially fill each mould cavity.

The present invention is suitable for a wide range of thermoplastics resin materials, including glass-filled fibre materials which require early pressurisation in order to achieve acceptable surface finishes. Also, a more consistent and uniform wall section thickness is achievable throughout the length of the gas channel as a result of more positive control of the gas and plastic flows. The process is further operable on moulding machines which are not capable of accurately delivering consistent volumes of plastics material.

The position of the or each gas injector in the mould cavity is not as critical as it is with other processes in which overflow cavities are utilised. In this regard, the present invention is suitable for expelling plastics from more than one position in a mould cavity. Also, the valve members into the secondary cavities can be sequentially opened and closed in order to optimise plastic expulsion and to avoid thick accumulations of plastics remaining in the moulded article.

With the present invention, the injection of an unpressurised accurate shot weight or filling volume is not necessary. Also, the timing of the gas injection is not as critical as in other processes. The packed pressure exerted by the moulding machine and subsequently the gas when the cavity is full of plastics material ensures a good reproducibility of the mould cavity and the moulded article itself. Flow and weld marks are reduced. Also, the appearance of hesitation marks, when partial filling of a cavity is desired, is also infrequent or minimised with the present invention.

The operation of the valve member 42, as well as any other valve members which are positioned between the mould cavity and respective secondary cavities, can be operated independently and timed to be sequential with the other secondary cavities. This allows the plastics to be expelled from the mould cavity in a desired sequence and in order to allow formation of various channels in various thicker sections or members of the moulded article. Also, as noted, the volume of plastics expelled from the mould cavity is not dependent on the timing of the gas injection. Instead, it is dependent on the timing of the valves and the volume of the secondary cavity or cavities and the opening and closing sequence of the valve members from the mould cavity into the secondary cavities.

In a further embodiment of the present invention, the valves in the flow runners or conduits between the mould cavity and the secondary cavity or cavities can be operated in a different manner. The valve members may be operable by the application of a selected pressure which is exerted by the injection of gas and in turn a transmission of pressure to the plastics material. This in turn will open the valve member, thus overcoming a preset closing force. The present closing forces may be applied to the valve members by mechanical spring members or other means, such as pneumatic, hydraulic, or electric.

Further, the opening and closing of the valve members may be controlled by any conventional means, such as pneumatic, hydraulic, electrical, or mechanical means. The opening and closing of the valve members can also be controlled by external means which may include digital or computer timing, external or integral with the gas pressure control means.

Avoiding the need to partially fill the mould cavity eliminates the tendency to form hesitation marks on the article at positions to which the plastics flows and stops before the gas is injected.

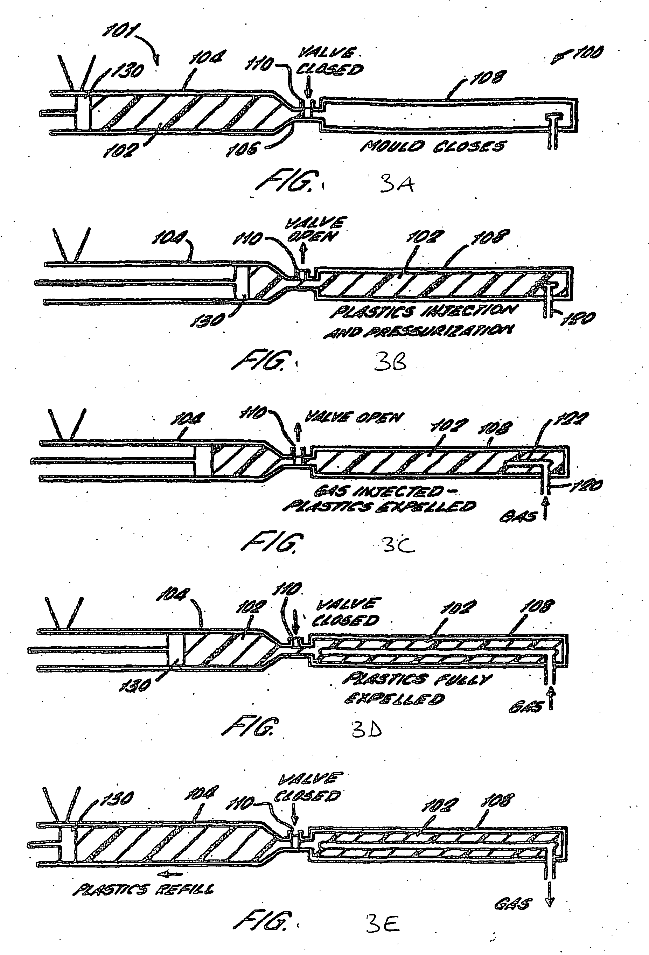

Alternatively or additionally to expelling a portion of the plastics material into one or more secondary cavities, it is also possible to expel a portion of the plastics material back into the injection moulding machine barrel, the barrel thereby constituting a secondary cavity. This is accomplished by the gas pressure pushing back the injection screw or piston against a controllable back pressure. This process is shown in Figures 3A - 3E and referred to generally by the reference numeral 100. As shown in Figure 3A, plastics material 102 is positioned in a barrel 104 of an injection moulding machine 101. The barrel 104 has a nozzle 106 which is connected in any conventional manner with a mould cavity 108. A valve member 110 controls the flow of plastics from the barrel member into the mould cavity. At the initial sequence of steps, as shown in Figure 3B, the valve member 110 is opened allowing plastics material to be injected from the barrel 104 into the mould cavity 108. Thereafter, the pressure is temporarily held by the injection moulding machine relative to the plastics in the mould cavity 108, preferably for at least 1-5 seconds.

With the machine screw or plunger 130 held forward or valve 110 closed, gas injection begins through gas injection conduit 120, the gas creating a hollow cavity in the plastics material and forcing the plastics material against the inner surfaces of the mould cavity. An outer skin of the plastics material becomes solidified whilst a core portion of the plastics material remains molten.

Thereafter, as shown in Figure 3C, gas continues to be injected into the plastics material in the mould cavity through gas injection conduit 120, with the valve member 110 open. The gas 122 expels a portion of the plastics back into the machine cylinder or barrel 104 and extends the hollow cavity in the plastics material in the mould cavity 108.

At this point in the process, the pressure is reduced from the moulding machine screw or plunger member 130 which enables expulsion of molten plastics material 102 from the mould cavity back into the machine cylinder or barrel 104. Space in the barrel 104 can be formed by the pressure of the gas forcing the plunger member 130 away from the mould.

Following completion of plastics expulsion, the gas pressure is held during cooling and solidification of the remaining plastics material in the mould cavity, and valve member 110 is closed. This is shown in Figure 3D. At this point, the plastics is subjected to packing pressure and has its surface forced tightly against the inside surfaces of the mould cavity. This produces a good surface finish and creates a full definition of the surface of the mould. Thereafter, the gas pressure in the mould cavity is reduced under control to atmospheric pressure. This is shown in Figure 3E. Thereafter, the machine barrel 104 is completely refilled with plastics material, ready for the next moulding cycle. At the same time, the mould is opened and the formed plastics part is removed or ejected from the moulding machine.

The advantages of this alternative embodiment of the present invention is that the expelled plastics can be remoulded in succeeding shots. This eliminates regrinding or recovery of the expelled material from a spillover or secondary cavity. Also, retrimming of the moulding is not necessary, and the system does not have to expend the cost of additional shutoff valves in the runner members.

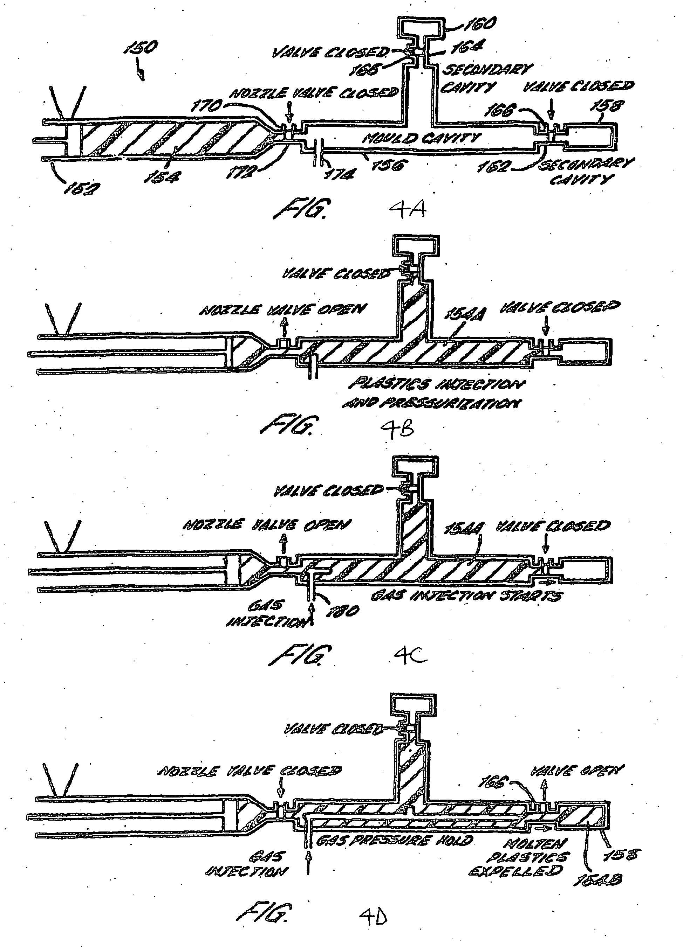

An embodiment of the invention in which more than one secondary cavity is utilised is shown in Figures 4A - 4F and designated generally by the reference numeral 150. The embodiment 150 includes an injection moulding machine 152 which is set up to inject a quantity of molten plastics material 154 into a mould cavity 156 in a mould. The primary mould cavity 156 has a pair of secondary cavities 158 and 160 which are connected to the mould cavity 156 by conduits or runners 162 and 164 respectively. Valve members 166 and 168 are positioned in the conduits and act to open and close the flow plastics from the mould cavity 156 to the secondary cavities. Another valve member 170 is positioned at the inlet to the primary mould cavity 156 (or in the nozzle) and used to open and close the conduit 172 which connects the injection moulding machine nozzle to the mould cavity. Port or pin member 174 is used to inject gas into the mould cavity.

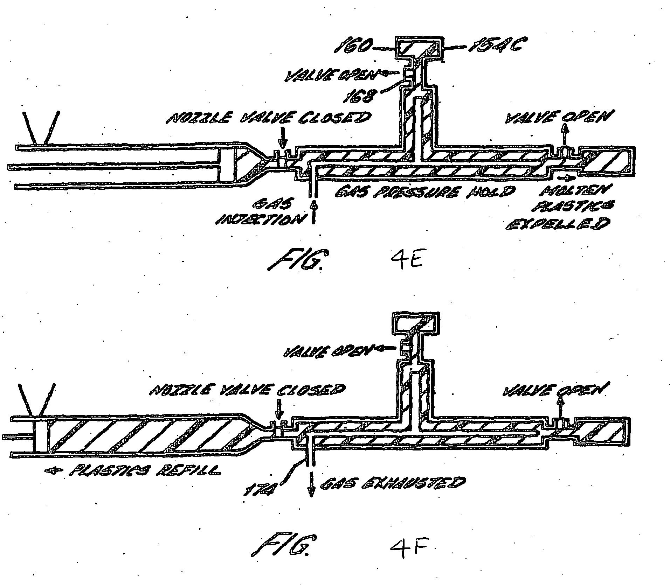

The sequence of steps for use of system 150 is illustrated in Figures 4A - 4F. Molten plastics material 154A is first injected into the mould cavity and retained there for a brief period of "packing pressure" (Figure 4B). Gas 180 is then injected into the plastics material in the mould cavity and the pressure is held for an amount of time which ensures that the plastics material is held against the inner wall surfaces of the mould cavity and an outer skin of the plastics material has solidified whilst a core portion of the plastics material remains molten (Figure 4C). Valve member 166 is then opened and a first quantity of plastics material 154B is expelled into a first secondary cavity 158 (Figure 4D). Thereafter, valve member 168 is opened and a second quantity of plastics material 154C is expelled into a second secondary cavity 160 (Figure 4E). Once the part has cooled and solidified sufficiently, the gas is exhausted back through port 174 (Figure 4F). In the final steps, the mould is opened, the part is ejected, and the system is prepared for the start of another cycle.

The embodiment shown in Figures 4A - 4F is representative of an embodiment in accordance with the present invention in which more than one secondary cavity is utilised. Variations and changes can be made by persons of ordinary skill in the art to develop other multiple secondary cavity systems. It is often advantageous to expel portions of the plastics material into second, third, or even fourth secondary cavities in order to relieve thick sections of the plastics remaining after the first expulsion. This can be evident in a non-uniformly thick section moulding such as an automobile door handle.

The operation of the valve member 42, as well as any other valve members which are positioned between the mould cavity and the secondary cavities, can be operated independently and timed to be sequential with the other secondary cavities. This allows the plastics to be expelled from the mould cavity in a desired sequence and in order to allow formation of various channels in various thicker sections or members of the product. Also, as noted above, the volume of plastics expelled from the mould cavity is not dependent on the timing of the gas. Instead, it is dependent on the timing of the valves and the volume of the secondary cavity or cavities, and the opening and closing sequence of the valve members from the mould cavity into the secondary cavities.

In a further embodiment of the present invention, the valves in the runners or conduits between the mould cavity and the secondary cavity or cavities can be operated in a different manner. The valve members may be operable by the application of a selected pressure which is exerted by the injection of gas and in turn a transmission of pressure to the plastics material. This in turn will open the valve member, thus overcoming a preset closing force. The preset closing forces may be applied to the valve members by mechanical spring members or other means, such as pneumatic, hydraulic, or electric.

Further, the opening and closing of the valve members may be controlled by any conventional means, such as pneumatic, hydraulic, electrical, or mechanical means. The opening and closing of the valve members can also be controlled by external means which may include digital or computer timing, external or integral with the gas pressure control means.

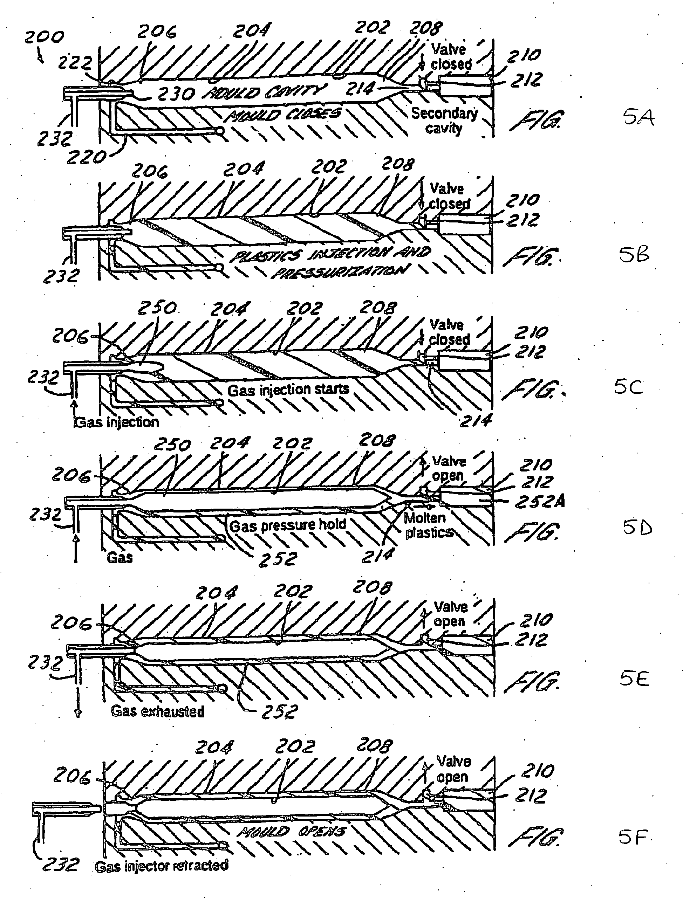

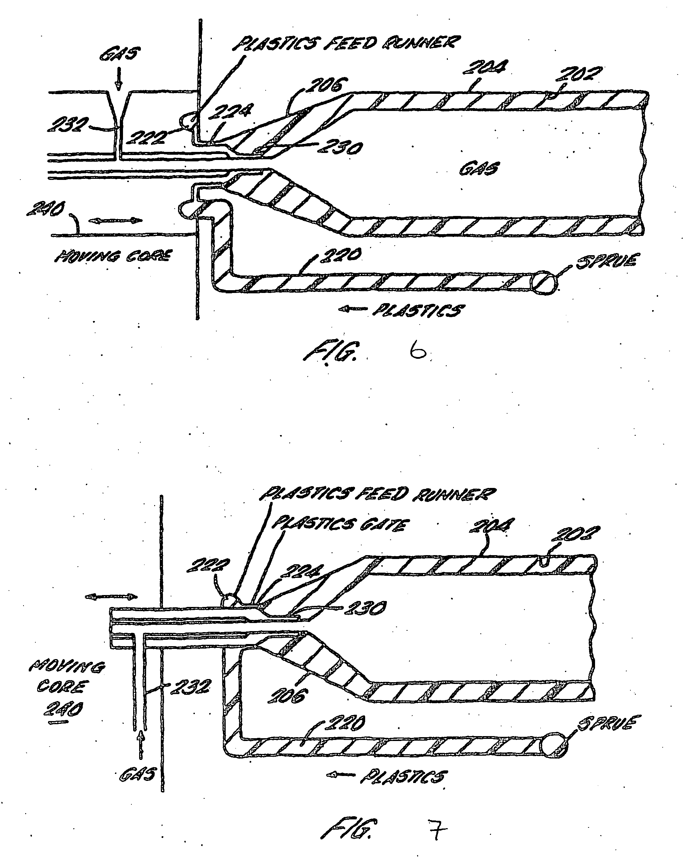

The present invention also can be used in the manufacture of hollow tubular components. A preferred moulding system and process for this is shown in Figures 5A - 5F, while other embodiments of portions of this mechanism and system are illustrated in Figures 6 and 7. There is a need today for the manufacture of hollow tubular components from plastics materials. These components can be used, for example, as rollers for printers. The tubular components have to be dimensionally stable and straight circular cross-sections with concentric hollow intersections in many cases. It is also desirable to include features in the moulding which could normally not be extruded, but which are possible with injection moulded products. These include grooving or screw threads on the outer surface, brackets and other external fittings, connection mechanisms for use as spindles, and the inclusion of gear teeth or other configurations to provide ways to rotate the roller.

With conventional injection moulding techniques, either as a solid section or with mechanically moving side cores to form the inter-tubular section, it is difficult to achieve flatness without distortion over the length of the component and to reduce moulding time cycles. In prior attempts to use gas assisted moulding for hollow products or components, it has proved difficult to achieve concentricity and uniform wall section thickness along the length of the tubular components.

In order to achieve axial flatness over the length of the tubular section, uniform shrinkage of the plastics as it cools and changes from a liquid into a solid should be achieved. It is also important to eliminate or minimise stress in the moulding of the plastics since moulding stresses can cause ejected parts to distort or warp. Injection moulded plastics parts which have stress in them have a tendency to relieve that stress by distortion and warpage of the component after they are ejected from the mould.

With the present invention, concentricity and uniformity of wall section can be achieved. The plastics and gas flows are controlled in an axial direction, and there is no random or uncontrolled sideways movement or turbulence in the plastics flow. The gas flows axially at the centre of the tubular section and is utilised to expel the plastics uniformly throughout the length of the tube into the secondary cavity or cavities. There is no lateral movement of the plastics after forming and within the semi-molten skin adjacent to the mould cavity surface. A uniform rate of cooling is achieved since there is good temperature control of the mould cavity members and there is a good plastics to mould surface contact to ensure uniform conduction of heat from the plastics.

In order to achieve a flow of plastics without turbulence, a mould cavity is formed which has a circular middle section and two cone-shaped configurations at the two ends. The molten plastics is injected through a peripheral film gate from a runner surrounding the gate section feeding into the apex of the cone at the inlet end. The plastics is injected along a thinner section and it flows and expands gradually along a cone or cone-like configuration up to the maximum required cylindrical section. Thereby the plastics maintains contact with the surfaces of the mould cavity as the mould cavity is filled.

The gas is injected in a central position along the axis of the tube and used to expel the plastics from the centre. The gas is injected near the apex of the cone in order to allow a gradual expansion into the desired intersection of the plastics. The speed of plastics injection is controlled from an initially slow rate and increased to a faster rate after the cone is filled and as the plastics completes the filling of the cylindrical section. The speed of the plastics injection slows again before the final cavity filling is completed.

The control of the gas injection speed, and therefore the pressure, is also controlled such that the gas is injected at a low pressure before expulsion of the plastics begins. This means that the pressure in which the gas is injected is lower before the opening of the valve in the runner or conduit which connects the mould cavity to the secondary cavity.

The tubular section at the distal end of the mould cavity adjacent to the secondary cavity can be reduced in size to gradually reduce the flow of plastics to a thinner section. This allows the expulsion of the plastics to be controlled through the outflow runner and stop valve into the secondary cavity. In this regard, a second cone-shaped cavity configuration is shown in the drawings and described below, but it is to be understood that any shape or configuration can be utilised at the distal end of the mould cavity. However, it is preferred that the cross-sectional size be reduced at the distal end of the cavity.

A sequence of steps which can be utilised in the plastics expulsion process in order to manufacture hollow tubular components is shown in Figures 5A - 5F. The process is generally referred to by the reference numeral 200 in the drawings.

As shown in Figure 5A, the mould cavity 202 generally has a central elongated portion or section 204, a cone shaped configuration 206 at the leading end (that is the entrance at which the gas and plastics are injected into the cavity), and preferably a corresponding cone-shaped configuration 208 at the distal end adjacent a secondary cavity 210. A valve member 212 is positioned in the conduit or runner connecting the mould cavity 202 with the secondary cavity 210. The valve member can be any conventional type, such as those described above with reference to Figures 1 to 4. The valve member may also have a tapered leading edge, as illustrated in Figures 5A - 5F.

Plastics introduced into the mould cavity 202 through runner 220 and film gate 222. Detailed versions of the plastics feed runner 220 and the plastics gate 222 are better shown in Figures 6 and 7.

The gas is injected into the mould cavity from gas injector port 230 which is positioned at the apex of the cone-shaped inlet section 206. Gas is directed to the port 230 from conduit or inlet line 232.

Also, as shown in Figures 6 and 7, it is possible to have a moving core 240 as part of the mechanism and system.

As shown in Figure 5B, the sequence of the moulding process includes the initial injection of molten plastics material into the mould cavity 202. At this point, the valve member 212 is closed. After the plastics is injected into the mould cavity, the plastics is pressurised or packed in the cavity in order to provide good surface characteristics of the outer surface of the moulded component. In this regard, the plastics is pressurised and compacted for a short dwell period of time of the order of 1-5 seconds by the moulding machine. This ensures good reproducibility of the mould surface on the moulded product or article and good replications of the mould cavity shape.

Thereafter, as shown in Figure 5C, the injection of the gas is commenced. The gas, which is shown schematically by the reference numeral 250, creates a cavity in the plastics material, and continues to apply pressure within the plastics in the mould cavity 202. After a short dwell time in which the gas pressure is utilised to assist in forcing the plastics material against the internal walls or surfaces of the mould cavity and to ensure that an outer skin of the plastics material has solidified whilst a core portion of the plastics material remains molten, the valve member 212 is opened.

With the valve member 212 opened (Figure 5D), the molten plastics material in the centre of the mould cavity 202 is allowed to be expelled from the mould cavity. The expulsion of the molten plastics is taken from the centre of the tubular section and enters the secondary cavity 210 through the connecting runner 214. In Figure 5D, the hollow centre of the tubular component, which is filled with gas, is indicated by the reference numeral 250, while the outer plastics now tubular component is referred to by the reference numeral 252. The plastics material in the secondary or overflow cavity 210 is referred to by the reference numeral 252A.

When the expulsion of plastics is complete, the gas pressure within the inner tubular channel is maintained so that the outer surface of the plastics remains in contact uniformly with the mould cavity surface, thereby ensuring uniform conduction of heat from the plastics to the mould.

After complete solidification of the plastics tubular component, the gas pressure is relieved and the gas is exhausted from the mould. This is shown in Figure 5E. Thereafter the movable core (if utilised) is removed from the mould cavity (Figure 5F), and the mould is opened and the part ejected. The portion of the plastics material 252A in the secondary cavity 210 is also ejected at the same time. In this regard, as indicated above, the plastics material in the secondary cavity can be reground and used again, can be scrapped, or can be made into another plastics component or part having the shape of the secondary cavity.

Once the plastics tubular component is formed and ejected from the mould, post moulding operations are necessary in order to trim off the cone sections at each end. This forms the final hollow tube or component.

The cone-shaped sections or configurations 206 and 208 of the mould cavity 202 preferably have included angles up to between 10-60 degrees. This assists in the uniform axial fill of the plastics from the apex of the cone and allows the plastics to expand up to the maximum cylindrical section as required in order to avoid turbulence or non-uniform flow of the plastics material.

Injecting the gas at an axial direction from a gas injection assembly or port 230 mounted in a movable core assembly 240 enables the gas injector to be withdrawn axially from the moulded component before the mould is opened and the part is ejected.

As an additional embodiment in the system and process of Figure 5, the movable gas injector and plastics feed gate can be combined in order to feed the plastics to a ring gate configuration in which the plastics flows from a ringed runner 222 formed around the gas injector barrel, and then through a thinner ringed gate 224 flowing into the mould cavity so that it is coaxial with the gas injection when the gas is injected after the mould filling is complete. Thereby the plastics maintains contact with the surfaces of the mould cavity as the mould cavity is filled. This is illustrated in Figure 7. An alternative configuration of the plastics runner can be utilised where the runner is formed by a groove between the enlarged movable core and the mould plate. This is illustrated in Figure 6.

It is possible in accordance with this hollow tubular embodiment to use the version of the plastics expulsion process as described above with respect to Figures 3A to 3E. The molten plastics is expelled back into the moulding machine cylinder, as well as or instead of into a secondary cavity. The expelled plastics forces back the screw in the barrel of the moulding machine to provide the necessary controlled space volume within the cylinder.

For this embodiment, the gas is injected from a cone extension of the tubular component at the opposite end to the plastics feed gate section. The gas injector is mounted on a movable side core which injects the gas into the mould cavity in an axial direction, thereby expelling a uniform flow of plastics exiting from the cone-shaped feed section, through the feed gates, runners, and sprue and back into the machine cylinder. The gas pressure is maintained in the mould cavity in order to force the plastics against the surfaces of the mould cavity, which ensures good service replication and uniform conduction of heat from the plastics to the mould.

In the manufacture of an injection moulded tubular structure of component, the component can be moulded as one piece and can be moulded together with additional features, such as pulley wheels, gear wheels with profiled teeth, or with screw threads, grooves, or other profiles on the outer surface of the tubular section. These additional features can be formed by machining applicable cavities for them in the mould cavity surfaces.

In further embodiments, similar to each of the above, there is employed a pressurised liquid, instead of pressurised gas, to create a hollow cavity in the plastics material in the mould cavity as a result of volumetric contraction or shrinkage of the plastics material, and to apply a packing pressure. Again, the packing pressure first creates a hollow cavity in the plastics material and applies a packing pressure which forces the plastics material against the inner surfaces of the mould cavity. The packing pressure is also held for a period of time which ensures that an outer skin of the plastics material has solidified whilst a core portion of the plastics material remains molten. Subsequently the pressurised liquid expels a portion of the plastics material from the mould cavity into one or more secondary cavities and/or back into the injection machine barrel, the barrel constituting a secondary cavity. The liquid is conveniently water, but other liquids may be used, if desired. The use of cold water can also reduce the time of the cooling stage and thereby shorten the cycle time.

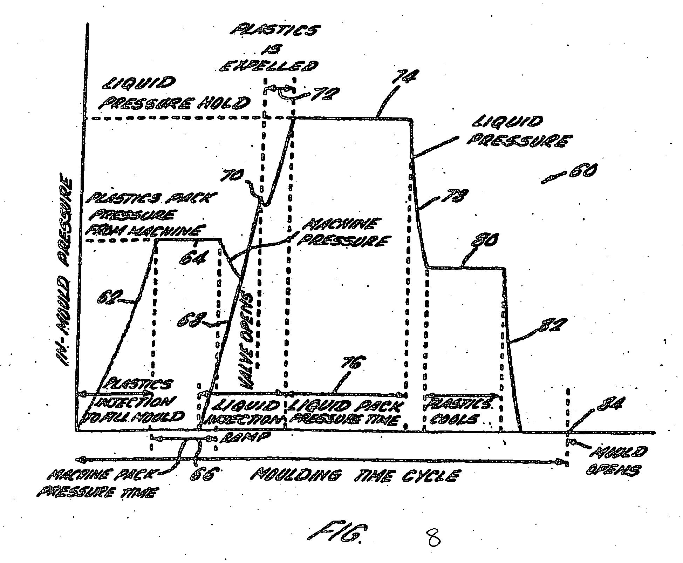

Figures 8 is a graph which corresponds to Figures 2 respectively, for the use of liquid instead of gas as the pressurising fluid.

The graph of Figure 8 includes the step of using the moulding machine to hold the plastics pressure to pack the plastics as shown by line 64. The time at which the machine packs the plastics is indicated by the arrow 66. That time can be adjusted as desired.

Thereafter, as shown by line 68, the pressurised liquid is injected into the plastics material in the mould cavity and applies a further packing pressure to the plastics material. The moulding cycle then continues as described above in connection with Figure 2.

The ability to pressure pack the plastics both while the mould cavity is filled with plastics, and while the mould cavity is filled with plastics and during initial injection of pressurised liquid, assists to ensure accurate replication of the mould surface without shrinkage of the plastics from the surface.

One advantage of employing a liquid rather than a gas as the pressurising fluid is to provide a smoother internal wall surface within the plastics material, which is particularly desirable in the case of the tubular products of the above embodiments of Figures 5 to 7. Another advantage is that gas can tend to permeate into the wall of plastics material. Permeation is avoided or reduced by the use of liquid as the pressuring fluid.

In a further embodiment, the secondary cavity or at least one secondary cavity is positioned in the mould, but upstream of the mould cavity, the secondary cavity being coupled to the flow runner or conduit through which the plastics is injected into the mould cavity.

Alternatively or additionally, the secondary cavity or at least one secondary cavity is coupled to the mould cavity at a position within the mould cavity and near to the plastics feed position in the mould cavity.

In either case, the gas or liquid injection position can then be positioned in the mould cavity and downstream of both the plastics feed position and the or each secondary cavity so that the expulsion of plastics material from the mould cavity is in a substantially contra direction to the flow of plastics material during the filling of the mould cavity.

## Claims

1. A process for injection moulding a hollow plastics article comprising the steps of:
injecting a quantity of molten plastics material into a mould cavity at least to substantially fill the mould cavity using an injection moulding machine;
applying a packing pressure to the plastics material in the mould cavity by the plastics injection pressure;
injecting pressurised gas or pressurised liquid into the plastics material in the mould cavity;
allowing a portion of the molten plastics material in the mould to be expelled into at least one secondary cavity coupled to the mould cavity;
permitting the remaining plastics material in the mould cavity to solidify;
exhausting the gas or liquid from the mould cavity; and
removing the plastics article from the mould;
**characterised in that** the pressure of the gas or liquid on the plastics material in the mould cavity is held for a period of time at a further packing pressure on the plastics material while preventing plastic from being forced back into the injection moulding machine, then allowing a portion of the plastics material to be expelled into said at least one secondary cavity, the step of holding the pressure of the gas or liquid on the plastics material in the mould cavity ensuring that the plastics material is held against a wall surface of the mould cavity and an outer skin of the plastics material has solidified whilst a core portion of the plastics material remains molten.

2. The process as claimed in Claim 1, comprising the step of applying the packing pressure to the plastics material injection pressure in the mould cavity for a predetermined amount of time prior to the injection of gas or liquid into the plastics material.

3. A process as claimed in claim 1 or claim 2, wherein the expulsion step is achieved by opening a valve in a flow runner or conduit connecting the mould cavity to the or each secondary cavity whilst maintaining gas or liquid pressure in the mould cavity.

4. A process as claimed in any of claims 1 to 3, wherein the plastics article to be moulded has at least one section which is thicker than other sections and the charge of pressurised gas or liquid is introduced into the thicker section in order to form a hollow portion therein.

5. A process as claimed in any one of the preceding claims, wherein the volume of said at least one secondary cavity is adjusted in order to allow expulsion of a predetermined amount of plastics material from the mould cavity.

6. A process as claimed in any one of the preceding claims, wherein portions of the plastics material are expelled into at least two secondary cavities.

7. A process as claimed in any one of the preceding claims, wherein at least two secondary cavities are provided and the step of allowing portions of the plastics material in the mould to be expelled into the secondary cavities comprises opening valve members positioned in respective flow runners or conduits connecting the mould cavity with the secondary cavities.

8. A process as claimed in Claim 10, wherein the opening of the valve members is controlled sequentially in order to allow selective expelling of plastics material into the at least two secondary cavities.

9. A process as claimed in any one of the preceding claims, wherein the process is applied for injection moulding a hollow plastics tubular article, the mould cavity having a substantially cone-shaped inlet portion, an elongate central portion and an exit portion.

10. A process as claimed in Claim 9, wherein said cone-shaped portion has an apex and said gas or liquid is injected into the plastics material at said apex.

11. A process as claimed in Claim 9 or Claim 10, wherein said exit portion comprises a second substantially cone-shaped portion, said cone-shaped exit portion having an apex and said expulsion of plastics material from the mould cavity into the secondary cavity occurs through said apex.

12. A process as claimed in any one of Claims 9 to 11, wherein the plastics material is injected into the mould cavity at said cone-shaped inlet portion and maintains contact with the surfaces of the mould cavity as the mould cavity is filled.

13. A process as claimed in Claim 12, including a ring gate mechanism for injecting the plastics material into said cone-shaped inlet portion.

14. A process as claimed in any one of Claims 9 to 13, including the step of trimming at least one end of the article to form a tubular article.

15. A process as claimed in Claim 14, wherein the article is trimmed to form a tubular article of substantially constant cross-section.

16. A process as claimed in Claim 3, wherein the valve is opened by the application of a selected pressure which is exerted by the injection of gas and in turn a transmission of pressure to the plastics material.

17. A process as claimed in Claim 7 or Claim 8, wherein each valve member is opened by the application of a selected pressure which is exerted by the injection of gas and in turn a transmission of pressure to the plastics material.

18. A process as claimed in any one of the preceding claims, wherein said plastics material is injected into the mould cavity from an injection moulding machine with a barrel and nozzle, and a portion of the plastics material in the mould is allowed to be expelled back into the barrel of the injection moulding machine, the barrel constituting the secondary cavity or one of the secondary cavities.

19. A process for injection moulding a hollow plastics article utilising an injection moulding machine with a barrel and nozzle and a mould with a mould cavity therein having a shape defining at least a portion of the article, said process comprising the steps of:
injecting a quantity of molten plastics material into the mould cavity from the injection moulding machine at least to substantially fill the mould cavity using an injection moulding machine;
applying a packing pressure to the plastics material in the mould cavity by the plastics injection pressure;
injecting pressurised gas or pressurised liquid into the plastics material in the mould cavity;
allowing a portion of the molten plastics material in the mould to be expelled back into the barrel of the injection moulding machine;
permitting the remaining plastics material in the mould cavity to solidify;
exhausting the gas or liquid from the mould cavity; and
removing the plastics article from the mould;
**characterised in that** the pressure of the gas or liquid on the plastics material in the mould cavity is held for a period of time at a further packing pressure on the plastics material while preventing plastic from being forced back into the injection moulding machine, the step of holding the pressure of the gas or liquid on the plastics material in the mould cavity ensures that the plastics material is held against a wall surface of the mould cavity and an outer skin of the plastics material has solidified whilst a core portion of the plastics material remains molten, then allowing said portion of the plastics material to be expelled back into the barrel of the injection moulding machine.

20. A process as claimed in Claim 19, comprising the step of applying the packing pressure to the plastics material injection pressure in the mould cavity for a predetermined amount of time prior to the injection of gas or liquid into the plastics material.

21. A process as claimed in Claim 19 or claim 20, wherein the step of allowing plastics material to be expelled back into the barrel of the injection moulding machine is controlled so that a predetermined amount is expelled in a controlled manner.

22. A process as claimed in Claim 21, wherein the amount of plastics material which is expelled is controlled by controlling the speed and/or the extent by which the plastics material retracts an injection piston or screw in the barrel of the injection moulding machine.

23. A process as claimed in Claim 21 or Claim 22 wherein the amount of plastics material which is expelled is controlled by timing the closure of a shut-off valve member positioned in the flow path between the moulding cavity and the barrel of the injection moulding machine.

24. A process as claimed in any one of Claims 19 to 23, wherein the gas or liquid is injected into the plastics material at a location spaced from the nozzle of the injection moulding machine.

25. A process as claimed in any one of Claims 19 to 24, wherein said plastics article has at least one section which is thicker than other sections and said pressurised gas or liquid is introduced into the thicker section in order to form a hollow portion therein.

26. A process as claimed in any one of Claims 19 to 25, wherein the step of allowing a portion of the plastics material in the mould to be expelled back into the barrel of the injection moulding machine comprises opening a shut-off valve member positioned in the flow path between the mould cavity and the barrel of the injection moulding machine.

27. A process as claimed in Claim 26, wherein the valve member is included as part of the nozzle of the injection moulding machine.

28. A process as claimed in any one of Claims 19 to 22, wherein a first portion of the plastics material in the mould is allowed to be expelled back into the barrel of the injection moulding machine, and comprising the step of allowing a respective second portion of the plastics material in the mould to be expelled into one or more secondary cavities coupled to the mould cavity.

29. A process as claimed in Claim 28, wherein the step of allowing one or more second portions of the plastics material to be expelled into a respective secondary cavity comprises opening a valve member positioned in the flow path between the mould cavity and the secondary cavity.

30. A process as claimed in any one of Claims 1 to 16 or Claim 28 or Claim 29, comprising injecting the plastics material along a flow path into the mould cavity, and allowing one or more portions of the plastics material to be expelled into a secondary cavity or cavities coupled to the flow path.

31. A process as claimed in any one of Claims 1 to 16 or Claim 28 or Claim 29, wherein the or each secondary cavity is coupled to the mould cavity at a position within the mould cavity and near to the plastics feed position in the mould cavity.

32. A process as claimed in Claim 30 or Claim 31, wherein the gas or liquid injection position is positioned in the mould cavity and downstream of the plastics feed position and the or each secondary cavity so that the expulsion of plastics material is in a substantially contra direction to the flow of plastics material during the filling of the mould cavity.

33. A process as claimed in any one of the preceding claims, wherein at least two gas or liquid injecting positions are provided in one mould cavity.

34. A process as claimed in Claim 33, wherein the commencement of gas or liquid injection from each gas or liquid feed position in the mould cavity is controlled sequentially.

## Patentansprüche

1. Verfahren zum Spritzgießen eines hohlen Kunststoffprodukts, wobei das Verfahren die folgenden Schritte aufweist:
Einbringen einer Menge geschmolzener Kunststoffmasse in einen Formhohlraum, um den Formhohlraum zumindest im Wesentlichen zu füllen, unter Verwendung einer Spritzgießmaschine;
Aufbringen eines Verdichtungsdrucks auf die Kunststoffmasse in dem Formhohlraum durch den Einspritzdruck der Kunststoffmasse;
Einbringen von unter Druck stehendem Gas oder einer unter Druck stehenden Flüssigkeit in die Kunststoffmasse in dem Formhohlraum;
Zulassen, dass ein Teil der geschmolzenen Kunststoffmasse in der Form in mindestens einen sekundären mit dem Formhohlraum verbundenen Hohlraum ausgestoßen wird;
Zulassen, dass die verbleibende Kunststoffmasse in dem Formhohlraum erstarrt;
Ausstoßen des Gases oder der Flüssigkeit aus dem Formhohlraum; und
Entfernen des Kunststoffprodukts aus der Form;
**dadurch gekennzeichnet, dass** der auf die Kunststoffmasse in dem Formhohlraum aufgebrachte Druck des Gases oder der Flüssigkeit über einen Zeitraum auf einem weiteren Verdichtungsdruck auf die Kunststoffmasse gehalten wird, während verhindert wird, dass der Kunststoff zurück in die Spritzgießmaschine gedrückt wird, anschließendes Zulassen, dass ein Teil der Kunststoffmasse in besagten mindestens einen sekundären Hohlraum ausgestoßen wird, wobei der Schritt des Haltens des Drucks des Gases oder der Flüssigkeit auf die Kunststoffmasse in dem Formhohlraum gewährleistet, dass die Kunststoffmasse gegen eine Wandfläche des Formhohlraums gedrückt wird und eine Außenschicht der Kunststoffmasse erstarrt, während ein Kernabschnitt der Kunststoffmasse geschmolzen bleibt.

2. Verfahren nach Anspruch 1, welches den Schritt des Aufbringens des Verdichtungsdrucks auf den Einspritzdruck der Kunststoffmasse in dem Formhohlraum über einen vorbestimmten Zeitraum vor dem Einbringen des Gases oder der Flüssigkeit in die Kunststoffmasse einschließt.

3. Verfahren nach Anspruch 1 oder 2, **dadurch gekennzeichnet, dass** der Austreibeschritt durch das Öffnen eines Ventils in einem Strömungs-Angussverteiler oder -kanal erreicht wird, welche den Formhohlraum mit einem oder jedem sekundären Hohlraum verbinden, während der Druck des Gases oder der Flüssigkeit in dem Formhohlraum aufrechterhalten wird.

4. Verfahren nach einem der Ansprüche 1 bis 3, **dadurch gekennzeichnet, dass** das zu formende Kunststoffprodukt mindestens einen Abschnitt aufweist, der dicker als andere Abschnitte ist, und die Ladung des unter Druck stehenden Gases oder der unter Druck stehenden Flüssigkeit in den dickeren Abschnitt eingebracht wird, um einen hohlen Abschnitt darin zu formen.

5. Verfahren nach einem der vorhergehenden Ansprüche, **dadurch gekennzeichnet, dass** das Volumen des besagten mindestens einen sekundären Hohlraums angepasst wird, um das Austreiben einer vorbestimmten Menge Kunststoffmasse aus dem Formhohlraum zuzulassen.

6. Verfahren nach einem der vorhergehenden Ansprüche, **dadurch gekennzeichnet, dass** Teile der Kunststoffmasse in mindestens zwei sekundäre Hohlräume ausgestoßen werden.

7. Verfahren nach einem der vorhergehenden Ansprüche, **dadurch gekennzeichnet, dass** mindestens zwei sekundäre Hohlräume vorgesehen sind und der Schritt des Zulassens, dass Teile der Kunststoffmasse in der Form in die sekundären Hohlräume ausgestoßen werden, das Öffnen von Ventilelementen aufweist, die in jeweiligen Strömungs-Angussverteilern oder -kanälen angeordnet sind, die den Formhohlraum mit den sekundären Hohlräumen verbinden.

8. Verfahren nach Anspruch 7, **dadurch gekennzeichnet, dass** das Öffnen der Ventilelemente sequenziell gesteuert wird, um das selektive Austreiben der Kunststoffmasse in die mindestens zwei sekundären Hohlräume zuzulassen.

9. Verfahren nach einem der vorhergehenden Ansprüche, **dadurch gekennzeichnet, dass** das Verfahren zum Spritzgießen eines hohlen, röhrenförmigen Kunststoffproduktes eingesetzt wird, wobei der Formhohlraum einen im Wesentlichen kegelförmigen Einlassabschnitt, einen länglichen Zentralabschnitt und einen Austrittsabschnitt aufweist.

10. Verfahren nach Anspruch 9, wobei der besagte kegelförmige Abschnitt eine Spitze aufweist und besagtes Gas oder besagte Flüssigkeit an besagter Spitze in die Kunststoffmasse eingebracht wird.

11. Verfahren nach Anspruch 9 oder 10, **dadurch gekennzeichnet, dass** der Austrittsbereich einen zweiten im Wesentlichen kegelförmigen Abschnitt aufweist, wobei der besagte kegelförmige Austrittsabschnitt eine Spitze aufweist, und die besagte Austreibung von Kunststoffmasse aus dem Formhohlraum in den sekundären Hohlraum durch besagte Spitze erfolgt.

12. Verfahren nach einem der Ansprüche 9 bis 11, **dadurch gekennzeichnet, dass** die Kunststoffmasse an besagtem kegelförmigen Einlassabschnitt in den Formhohlraum eingebracht wird und Kontakt mit den Oberflächen des Formhohlraums beibehält, während der Formhohlraum gefüllt wird.

13. Verfahren nach Anspruch 12, welches einen Mechanismus für eine ringförmige Anbindung beim Einbringen der Kunststoffmasse in besagten kegelförmigen Einlassabschnitt aufweist.

14. Verfahren nach einem der Ansprüche 9 bis 13, welches den Schritt des Ablängens von mindestens einem Ende des Produkts einschließt, um ein röhrenförmiges Produkt zu bilden.

15. Verfahren nach Anspruch 14, **dadurch gekennzeichnet, dass** das Produkt abgelängt wird, um ein röhrenförmiges Produkt mit im Wesentlichen konstantem Querschnitt zu bilden.

16. Verfahren nach Anspruch 3, **dadurch gekennzeichnet, dass** das Ventil durch das Aufbringen eines ausgewählten Drucks geöffnet wird, der durch das Einbringen von Gas und wiederum einer Übertragung des Drucks auf die Kunststoffmasse ausgeübt wird.

17. Verfahren nach Anspruch 7 oder 8, **dadurch gekennzeichnet, dass** jedes Ventilelement durch das Aufbringen eines ausgewählten Drucks geöffnet wird, der durch das Einbringen von Gas und wiederum einer Übertragung des Drucks auf die Kunststoffmasse ausgeübt wird.

18. Verfahren nach einem der vorgehenden Ansprüche, **dadurch gekennzeichnet, dass** die besagte Kunststoffmasse von einer Spritzgießmaschine mit einem Zylinder und einer Düse in den Formhohlraum eingespritzt wird, wobei das Verfahren weiterhin den Schritt des Zulassens, dass ein Teil der Kunststoffmasse in der Form zurück in den Zylinder der Spritzgießmaschine ausgetrieben wird, aufweist, wobei der Zylinder den sekundären Hohlraum oder einen der sekundären Hohlräume bildet.

19. Verfahren zum Spritzgießen eines hohlen Kunststoffprodukts unter Verwendung einer Spritzgießmaschine mit einem Zylinder und einer Düse und einer Form mit einem Formhohlraum darin, der eine Form aufweist, die mindestens einen Teil des Produkts definiert, wobei das besagte Verfahren die folgenden Schritte aufweist:
Einbringen einer Menge geschmolzener Kunststoffmasse in den Formhohlraum durch die Spritzgießmaschine, um den Formhohlraum zumindest im Wesentlichen zu füllen, unter Verwendung einer Spritzgießmaschine;
Aufbringen eines Verdichtungsdrucks auf die Kunststoffmasse in dem Formhohlraum durch den Einspritzdruck der Kunststoffmasse;
Einbringen von unter Druck stehendem Gas oder einer unter Druck stehenden Flüssigkeit in die Kunststoffmasse in dem Formhohlraum;
Zulassen, dass ein Teil der geschmolzenen Kunststoffmasse in der Form in den Zylinder der Spritzgießmaschine ausgestoßen wird;
Zulassen, dass die verbleibende Kunststoffmasse in dem Formhohlraum erstarrt;
Ausstoßen des Gases oder der Flüssigkeit aus dem Formhohlraum; und
Entfernen des Kunststoffprodukts aus der Form;
**dadurch gekennzeichnet, dass** der auf die Kunststoffmasse in dem Formhohlraum aufgebrachte Druck des Gases oder der Flüssigkeit über einen Zeitraum auf einem weiteren Verdichtungsdruck auf die Kunststoffmasse gehalten wird, während verhindert wird, dass der Kunststoff zurück in die Spritzgießmaschine gedrückt wird, wobei der Schritt des Haltens des Drucks des Gases oder der Flüssigkeit auf die Kunststoffmasse in dem Formhohlraum gewährleistet, dass die Kunststoffmasse gegen eine Wandfläche des Formhohlraums gedrückt wird und eine Außenschicht der Kunststoffmasse erstarrt, während ein Kernabschnitt der Kunststoffmasse geschmolzen bleibt, und anschließendes Zulassen, dass besagter Teil der Kunststoffmasse zurück in den Zylinder der Spritzgießmaschine ausgestoßen wird

20. Verfahren nach Anspruch 19, welches den Schritt des Aufbringens des Verdichtungsdrucks auf den Einspritzdruck der Kunststoffmasse in dem Formhohlraum über einen vorbestimmten Zeitraum vor dem Einbringen von Gas oder Flüssigkeit in die Kunststoffmasse aufweist.

21. Verfahren nach einem der Ansprüche 19 bis 20, **dadurch gekennzeichnet, dass** der Schritt des Zulassens, dass Kunststoffmasse zurück in den Zylinder der Spritzgießmaschine ausgetrieben wird, gesteuert wird, so dass eine vorbestimmte Menge auf gesteuerte Art und Weise ausgestoßen wird.

22. Verfahren nach Anspruch 21, **dadurch gekennzeichnet, dass** die Menge an Kunststoffmasse, die ausgestoßen wird, durch Steuern der Geschwindigkeit und/oder des Ausmaßes, in welchem die Kunststoffmasse einen Einspritzkolben oder eine Förderschnecke in dem Zylinder der Spritzgießmaschine zurückschiebt, gesteuert wird.

23. Verfahren nach Anspruch 21 oder 22, **dadurch gekennzeichnet, dass** die Menge an Kunststoffmasse, die ausgetrieben wird, durch Zeitsteuerung des Schließens eines Absperrventilelements, das in dem Durchflussweg zwischen dem Formhohlraum und dem Zylinder der Spritzgießmaschine angeordnet ist, gesteuert wird.

24. Verfahren nach einem der Ansprüche 19 bis 23, **dadurch gekennzeichnet, dass** das Gas oder die Flüssigkeit an einer von der Spritzdüse der Spritzgießmaschine beabstandeten Position in die Kunststoffmasse eingebracht wird.

25. Verfahren nach einem der Ansprüche 19 bis 24, **dadurch gekennzeichnet, dass** das besagte Kunststoffprodukt mindestens einen Abschnitt aufweist, der dicker als andere Abschnitte ist, und das besagte Druckgas oder die besagte Druckflüssigkeit in den dickeren Abschnitt eingebracht wird, um einen hohlen Bereich darin zu bilden.

26. Verfahren nach einem der Ansprüche 19 bis 25, **dadurch gekennzeichnet, dass** der Schritt des Zulassens, dass ein Teil der Kunststoffmasse in der Form zurück in den Zylinder der Spritzgießmaschine ausgestoßen wird, das Öffnen eines Absperrventilelements einschließt, welches in dem Durchflussweg zwischen dem Formhohlraum und dem Zylinder der Spritzgießmaschine angeordnet ist.

27. Verfahren nach Anspruch 26, wobei das Ventilelement als Teil der Spritzdüse der Spritzgießmaschine enthalten ist.

28. Verfahren nach einem der Ansprüche 19 bis 22, **dadurch gekennzeichnet, dass** zugelassen wird, dass ein erster Teil der Kunststoffmasse in der Form zurück in den Zylinder der Spritzgießmaschine ausgestoßen wird, und welches den Schritt des Zulassens, dass ein jeweiliger zweiter Teil der Kunststoffmasse in der Form in einen oder mehrere sekundäre Hohlräume, die mit dem Formhohlraum verbunden sind, ausgetrieben wird, aufweist.

29. Verfahren nach Anspruch 28, **dadurch gekennzeichnet, dass** der Schritt des Zulassens, dass ein oder mehrere zweite Teile der Kunststoffmasse in einen jeweiligen sekundären Hohlraum ausgetrieben werden, das Öffnen eines Ventilelelments beinhaltet, welches in dem Durchflussweg zwischen dem Formhohlraum und dem sekundärem Hohlraum angeordnet ist.

30. Verfahren nach einem der Ansprüche 1 bis 16, 28 oder 29, welches das Einbringen der Kunststoffmasse entlang eines Durchflusswegs in den Formhohlraum aufweist, und welche zulässt, dass ein oder mehrere Teile der Kunststoffmasse in einen sekundären Hohlraum oder sekundäre Hohlräume ausgetrieben werden, welche mit dem Durchflussweg verbunden sind.

31. Verfahren nach einem der Ansprüche 1 bis 16, 28 oder 29, **dadurch gekennzeichnet, dass** der eine oder alle sekundären Hohlräume mit dem Formhohlraum an einer Stelle innerhalb des Formhohlraums und nahe der Kunststoffzuführstelle in dem Formhohlraum verbunden sind.

32. Verfahren nach Anspruch 30 oder 31, **dadurch gekennzeichnet, dass** sich die Einbringposition für das Gas oder die Flüssigkeit in dem Formhohlraum und flussabwärts von der Kunststoffzuführposition und dem einen oder allen sekundären Hohlräumen befindet, so dass die Austreibung der Kunststoffmasse in einer im Wesentlichen entgegengesetzten Richtung zum Fluss der Kunststoffmasse während des Füllens des Formhohlraums stattfindet.

33. Verfahren nach einem der vorhergehenden Ansprüche, **dadurch gekennzeichnet, dass** mindestens zwei Einbringpositionen für das Gas oder die Flüssigkeit in einem Formhohlraum vorgesehen sind.

34. Verfahren nach Anspruch 33, welches den Schritt des sequenziellen Steuerns des Beginns des Einbringens von Gas oder Flüssigkeit von jeder Einbringposition für das Gas oder die Flüssigkeit in dem Formhohlraum einschließt.

## Revendications

1. Procédé de moulage par injection d'un article en matière plastique creux comprenant les étapes consistant à :
injecter une certaine quantité de matière plastique fondue dans une cavité de moule pour au moins remplir sensiblement la cavité de moule en utilisant une machine de moulage par injection ;
appliquer une pression de compression à la matière plastique dans la cavité de moule par la pression d'injection de matière plastique,
injecter un gaz sous pression ou un liquide sous pression dans la matière plastique dans la cavité de moule,
permettre à une partie de la matière plastique fondue dans le moule d'être expulsée dans au moins une cavité secondaire reliée à la cavité de moule,
permettre à la matière plastique restante dans la cavité de moule de se solidifier,
évacuer le gaz ou le liquide de la cavité de moule, et
ôter l'article en matière plastique du moule,
**caractérisé en ce que** la pression du gaz ou du liquide sur la matière plastique dans la cavité de moule est maintenue pendant un certain intervalle de temps à une pression supplémentaire de compression sur la matière plastique tout en empêchant que la matière plastique soit repoussée dans la machine de moulage par injection et permettant ainsi à une partie de la matière plastique d'être expulsée dans ladite au moins une cavité secondaire, l'étape consistant à maintenir la pression du gaz ou du liquide sur la matière plastique dans la cavité de moule assurant que la matière plastique est maintenue contre une surface de paroi de la cavité de moule et qu'une peau extérieure de la matière plastique s'est solidifiée, alors qu'une partie centrale de la matière plastique reste fondue.

2. Procédé selon la revendication 1, comprenant l'étape consistant à appliquer la pression de compression à la pression d'injection de matière plastique dans la cavité de moule pendant un intervalle de temps prédéterminé, avant l'injection du gaz ou du liquide dans la matière plastique.

3. Procédé selon la revendication 1 ou la revendication 2, dans lequel l'étape d'expulsion est réalisée en ouvrant une vanne dans un canal ou conduit d'écoulement reliant la cavité de moule à la cavité secondaire ou à chaque cavité secondaire tout en maintenant une pression de gaz ou de liquide dans la cavité de moule.

4. Procédé selon l'une quelconque des revendications 1 à 3, dans lequel l'article en matière plastique à mouler présente au moins une section qui est plus épaisse que d'autres sections et la charge de gaz ou de liquide sous pression est introduite dans la section plus épaisse de manière à y former une partie creuse.

5. Procédé selon l'une quelconque des revendications précédentes, dans lequel le volume de ladite au moins une cavité secondaire est ajusté de manière à permettre l'expulsion d'une quantité prédéterminée de matière plastique de la cavité de moule.

6. Procédé selon l'une quelconque des revendications précédentes, dans lequel des parties de la matière plastique sont expulsées dans au moins deux cavités secondaires.

7. Procédé selon l'une quelconque des revendications précédentes, dans lequel au moins deux cavités secondaires sont prévues et l'étape consistant à permettre à des parties de la matière plastique dans le moule d'être expulsées dans les cavités secondaires comprend l'ouverture d'éléments de vannes positionnés dans les canaux ou conduits d'écoulement respectifs reliant la cavité de moule aux cavités secondaires.

8. Procédé selon la revendication 10, dans lequel l'ouverture des éléments de vannes est commandée séquentiellement de manière à permettre une expulsion sélective de la matière plastique dans les au moins deux cavités secondaires.

9. Procédé selon l'une quelconque des revendications précédentes, dans lequel le procédé est appliqué pour mouler par injection un article tubulaire en matière plastique creux, la cavité de moule comportant une partie d'entrée pratiquement en forme de cône, une partie centrale allongée et une partie de sortie.

10. Procédé selon la revendication 9, dans lequel ladite partie en forme de cône comprend un sommet et ledit gaz ou liquide est injecté dans la matière plastique au niveau dudit sommet.

11. Procédé selon la revendication 9 ou la revendication 10, dans lequel ladite partie de sortie comprend une seconde partie pratiquement en forme de cône, ladite partie de sortie en forme de cône présentant un sommet et ladite expulsion de matière plastique depuis la cavité de moule dans la cavité secondaire a lieu au travers dudit sommet.

12. Procédé selon l'une quelconque des revendications 9 à 11, dans lequel la matière plastique est injectée dans la cavité de moule au niveau de ladite partie d'entrée en forme de cône et maintient un contact avec les surfaces de la cavité de moule lorsque la cavité de moule est remplie.

13. Procédé selon la revendication 12, comprenant un mécanisme d'entrée annulaire permettant d'injecter la matière plastique dans ladite partie d'entrée en forme de cône.

14. Procédé selon l'une quelconque des revendications 9 à 13, comprenant l'étape consistant à couper au moins une extrémité de l'article afin de former un article tubulaire.

15. Procédé selon la revendication 14, dans lequel l'article est coupé afin de former un article tubulaire présentant une section transversale pratiquement constante.

16. Procédé selon la revendication 3, dans lequel la vanne est ouverte par l'application d'une pression sélectionnée qui est exercée par l'injection de gaz et à son tour, une transmission de pression à la matière plastique.

17. Procédé selon la revendication 7 ou la revendication 8, dans lequel chaque élément de vanne est ouvert par l'application d'une pression sélectionnée qui est exercée par l'injection de gaz et à son tour, d'une transmission de pression à la matière plastique.

18. Procédé selon l'une quelconque des revendications précédentes, dans lequel ladite matière plastique est injectée dans la cavité de moule à partir d'une machine de moulage par injection comportant un cylindre et une buse, ledit procédé comprenant en outre l'étape consistant à permettre à une partie de la matière plastique dans le moule d'être expulsée en retour dans le cylindre de la machine de moulage par injection, le cylindre constituant la cavité secondaire ou l'une des cavités secondaires.

19. Procédé de moulage par injection d'un article en matière plastique creux utilisant une machine de moulage par injection comportant un cylindre et une buse ainsi qu'un moule avec une cavité de moule dans celui-ci ayant une forme qui définit au moins une partie de l'article, ledit procédé comprenant les étapes consistant à :
injecter une quantité de matière plastique fondue dans la cavité de moule depuis la machine de moulage par injection pour remplir au moins pratiquement la cavité de moule en utilisant une machine de moulage par injection ;
appliquer une pression de compression à la matière plastique dans la cavité de moule par la pression d'injection de matière plastique ;
injecter du gaz sous pression ou du liquide sous pression dans la matière plastique dans la cavité de moule ;
permettre qu'une partie de la matière plastique fondue dans le moule soit expulsée en retour dans le cylindre de la machine de moulage par injection,
permettre à la matière plastique restante dans la cavité de moule de se solidifier,
évacuer le gaz ou le liquide de la cavité de moule, et
ôter l'article en matière plastique du moule,
**caractérisé en ce que** de la pression du gaz ou du liquide sur la matière plastique dans la cavité de moule est maintenue pendant un intervalle de temps, à une pression supplémentaire de compression tout en empêchant que la matière plastique soit repoussée dans la machine de moulage par injection ;
l'étape consistant à maintenir la pression du gaz ou du liquide sur la matière plastique dans la cavité de moule assure que la matière plastique est maintenue contre une surface de paroi de la cavité de moule et qu'une peau extérieure de la matière plastique s'est solidifiée alors qu'une partie centrale de la matière plastique reste fondue, permettant ensuite à ladite partie de la matière plastique d'être expulsée en retour dans le cylindre de la machine de moulage par injection.

20. Procédé selon la revendication 19, comprenant l'étape d'application de la pression de compression à la pression d'injection de matière plastique dans la cavité de moule pendant une durée prédéterminée avant l'injection de gaz ou de liquide dans la matière plastique.

21. Procédé selon l'une quelconque des revendications 19 et 20, dans lequel l'étape consistant à permettre que la matière plastique soit expulsée en retour dans le cylindre de la machine de moulage par injection est commandée de sorte qu'une quantité prédéterminée soit expulsée d'une manière déterminée.

22. Procédé selon la revendication 21, dans lequel la quantité de matière plastique qui est expulsée est déterminée en commandant la vitesse et/ou la mesure selon laquelle la matière plastique rétracte un piston ou une vis d'injection dans le cylindre de la machine de moulage par injection.

23. Procédé selon la revendication 21 ou 22, dans lequel la quantité de matière plastique qui est expulsée est déterminée en temporisant la fermeture d'un élément de vanne d'arrêt positionné dans le trajet d'écoulement entre la cavité de moulage et le cylindre de la machine de moulage par injection.

24. Procédé selon l'une quelconque des revendications 19 à 23, dans lequel le gaz ou le liquide est injecté dans la matière plastique à un emplacement espacé de la buse de la machine de moulage par injection.

25. Procédé selon l'une quelconque des revendications 19 à 24, dans lequel ledit article en matière plastique comporte au moins une section qui est plus épaisse que d'autres sections et ledit gaz ou liquide sous pression est introduit dans la section plus épaisse de manière à y former une partie creuse.

26. Procédé selon l'une quelconque des revendications 19 à 25, dans lequel l'étape consistant à permettre qu'une partie de la matière plastique dans le moule soit expulsée en retour dans le cylindre de la machine de moulage par injection comprend l'ouverture d'un élément de vanne d'arrêt positionné dans le trajet d'écoulement entre la cavité de moule et le cylindre de la machine de moulage par injection.

27. Procédé selon la revendication 26, dans lequel l'élément de vanne est inclus en tant que partie de la buse de la machine de moulage par injection.

28. Procédé selon l'une quelconque des revendications 19 à 22, dans lequel on laisse une première partie de la matière plastique dans le moule être expulsée en retour dans le cylindre de la machine de moulage par injection, et comprenant l'étape consistant à permettre qu'une seconde partie respective de la matière plastique dans le moule soit expulsée dans une ou plusieurs cavités secondaires reliées à la cavité de moule.

29. Procédé selon la revendication 28, dans lequel l'étape consistant à permettre qu'une ou plusieurs secondes parties de la matière plastique soient expulsées dans une cavité secondaire respective comprend l'ouverture d'un élément de vanne positionné dans le trajet d'écoulement entre la cavité de moule et la cavité secondaire.

30. Procédé selon l'une quelconque des revendications 1 à 16 ou la revendication 28 ou bien la revendication 29, comprenant l'injection de la matière plastique le long d'un trajet d'écoulement jusque dans la cavité du moule, et le fait de permettre qu'une ou plusieurs parties de la matière plastique soient expulsées dans une ou des cavités secondaires reliées au trajet d'écoulement.

31. Procédé selon l'une quelconque des revendications 1 à 16, ou la revendication 28 ou bien la revendication 29, dans lequel la ou chaque cavité secondaire est reliée à la cavité de moule à une position à l'intérieur de la cavité de moule et près de la position d'alimentation en matière plastique dans la cavité de moule.

32. Procédé selon la revendication 30 ou la revendication 31, dans lequel la position d'injection de gaz ou de liquide est positionnée dans la cavité de moule et en aval de la position d'alimentation en matière plastique et de la ou de chaque cavité secondaire de sorte que l'expulsion de la matière plastique est dans une direction sensiblement contraire à l'écoulement de matière plastique au cours du remplissage de la cavité de moule.

33. Procédé selon l'une quelconque des revendications précédentes, dans lequel au moins deux positions d'injection de gaz ou de liquide sont prévues dans une cavité de moule.

34. Procédé selon la revendication 33, dans lequel début de l'injection de gaz ou de liquide provenant de chaque position d'alimentation en gaz ou en liquide dans la cavité de moule est contrôlé de manière séquentielle.
